# EUROPEAN PATENT SPECIFICATION

(11) **EP 1 310 076 B1**
(45) Date of publication and mention of the grant of the patent: **23.11.2005**
(21) Application number: 01964040.8
(22) Date of filing: 14.08.2001
(51) Int. Cl.: H04L 29/06, G06F 3/12

(54) **Method and system for the assured printing of confidential documents over a communication network**
Verfahren und System zum sicheren Ausdrucken von vertraulichen Dokumenten über ein Kommunikationsnetz
Procédé et système pour l'impression securisée des documents confidentiels sur un réseau de communication

(30) Priority: 17.08.2000 US 641929
(43) Date of publication of application: 14.05.2003
(73) Proprietor: Hewlett-Packard Company, Palo Alto, California 94304-1112 (US)
(72) Inventor: CURRANS, Kevin G., Philomath, OR 97370 (US)
(74) Representative: Jackson, Richard Eric
(86) International application number: PCT/US2001/025559
(87) International publication number: WO 2002/015516

(56) References cited:
- EP-A- 0 665 486
- EP-A- 0 929 023
- WO-A-98/33293
- US-A- 5 432 618

## Description

### FIELD OF THE INVENTION

The present invention relates generally to secure document printing. In particular, the present invention relates to a method and system for establishing that a document represented by a computer file that was sent via a data network, was successfully or unsuccessfully printed from a remote printing device.

### BACKGROUND OF THE INVENTION

The Internet, and in particular the World Wide Web, has enabled the instantaneous transfer of electronic files between computers that might be located anywhere in the world so long as the computers are coupled to the Internet. Because these files routinely represent documents, photographs, or perhaps bank account, credit card account numbers, all of which have economic value, the speed at which intellectual property and money can be transferred is now nearly instantaneous.

While the ease and speed with which documents and value can be transferred can be a boon to business it can also be a liability when the distribution of an electronic file needs to be controlled. By way of example, if a valuable work of art such as a photograph, is digitized (i.e. converted into an electronic file), uncontrolled reproduction and distribution of the electronic file that represents the art work will eventually render the work valueless. Electronically transferring files that have any sort of economic value is problematic because of the likelihood that economic value will be taken by those who are unscrupulous.

With the advent of electronic commerce, and the accompanying worldwide distribution of documents and other valuable information, a way of discerning that a document has been delivered to, and printed by, an intended recipient might prevent or reduce instances of fraud enabled by the ease with which electronic files can be reproduced and distributed.

### SUMMARY OF THE INVENTION

The present invention provides a method and system for verifying that a document was printed from an electronic file that was transmitted to and printed from a remote print mechanism. A first computer is coupled to a data transfer mechanism and is capable of receiving at least one potentially encrypted document file from a second computer. A print device, which is coupled to the first computer, is capable of printing at least a portion of the partially encrypted document file.

### BRIEF DESCRIPTION OF THE DRAWINGS

Figure 1 is a simplified block diagram of a computer network including a sender's computer and a document recipient's computer and printer.
Figures 2-1 through 2-13 show a data flow diagram or transaction timeline representation of the commands and signals exchanged between the various computers, software and printers that implement the claimed process.
Figure 3 is a schematic representation illustrating a unique document identification composite printed on a back side of a document in accordance with the present invention.
Figure 4 is a flow chart showing one embodiment of steps which may be employed in the present invention.
Figure 5 shows a simplified block diagram of the functional elements of an inkjet printer.
Figure 6 shows a sectional elevational view of an optical scanning mechanism assembly which may be employed in the present invention.
Figure 7 shows an exemplary layout of registration marks in the margins of a printed image.
Figure 8 is a flowchart showing a series of steps which may be employed in the present invention.

### DETAILED DESCRIPTION OF THE PREFERRED EMBODIMENTS

Briefly stated, the present invention provides a method and system for verifying that a document was printed from an electronic file that was transmitted to and printed from a remote print mechanism. The exemplary method disclosed herein enables a document or file distributor to control re-distribution by conclusively determining whether a document printed from a file was printed in whole or in part. In a preferred embodiment, the process includes the steps of encrypting a document and/or parts thereof that is to be transferred electronically, transmitting the encrypted document to an intended party via a data network, such as the Internet, partially decrypting the document using a first decryption key so as to enable the document to be verified that it was properly received, and printing part of the document up to a point at which a second decryption key is required.

If the document is successfully printed down to the point where a second encryption key is required, the recipient of the document returns to the sender, an indicia, such a serial number of the document, which has been physically printed on the document at the time, that the document had started to print successfully. Receipt of the partial-printing proof by the document sender triggers the transmission to the document recipient (i.e., the printer and not the user's browser), the second decryption key by which the remaining portion of the document can be decrypted and printed by the recipient (i.e., the printer and not the user's browser). Receipt of the indicia that the document was at least partially printed is created by the recipient's printer or print mechanism using a method disclosed in WO 02/15562 A1.

Upon the document sender's receipt of the indicia that the document was at least partially printed, the document recipient will thereby have provided to the document sender, conclusive proof that the entire documentwas received successfully. By using the technology disclosed in WO 02/14077 A1 referred to hereinafter as "guaranteed print," the accuracy of the document that was printed can be determined and a numerical indicia of output print quality generated such that a document sender provided with the print quality indicia can know whether the document that was printed was in fact a reasonably facsimile of the document that was electronically sent. Using the indicia of printing that was received by the sender, as well as an objective indicia of the output print quality documents that are sent electronically but which do not reasonable resemble their original condition as sent by the sender can be selectively retransmitted by the document sender at the document sender's discretion.

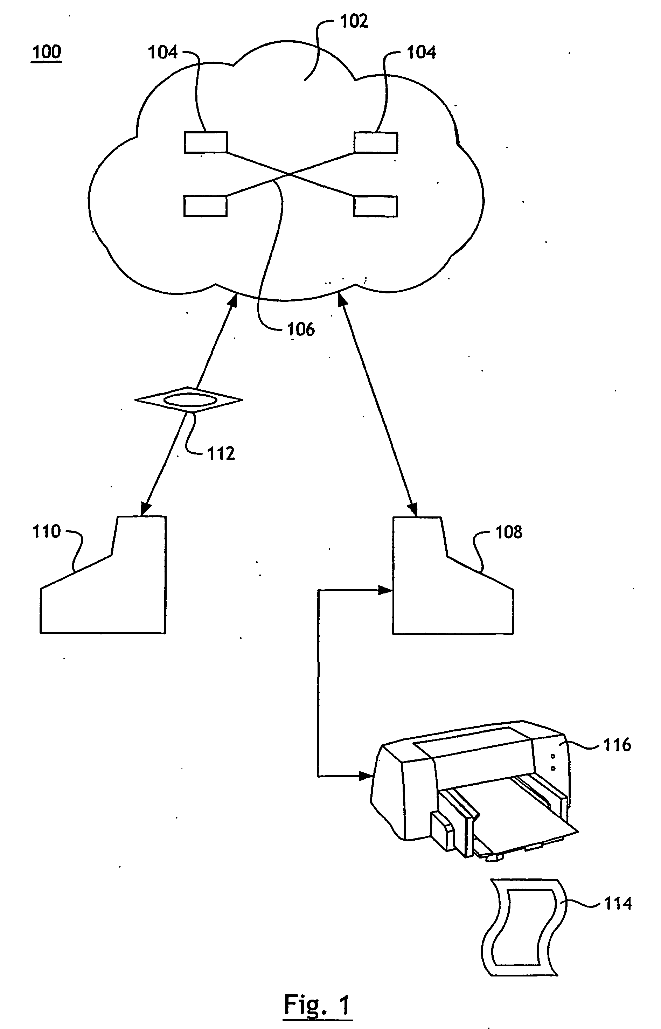

Figure 1 shows a simplified block diagram of a registered printing system 100 by which computer files are electronically transferred over a network, to be printed at a remote device. The system 100 is comprised of the Internet, which is a data network 102 comprised of a number of computers 104 intercoupled to each other via appropriate media 106 and switching systems (not shown). An explanation of computer networks is beyond the scope of this disclosure and not necessary for an appreciation of the invention disclosed herein. It is sufficient to state that electronic files are transferred between computers over the network. In addition to the Internet, other data transfer mechanisms such as Ethernet networks, local area networks, wide area networks or direct dial-up connections using one or modems (not shown) could be used to accomplish file transfers. The transferred files might represent a variety of documents, such as works of art, photographs, negotiable instruments, vouchers or other means of sending or receiving documents having economic value to either the sender or recipient. When such documents are printed, they typically have or represent economic value to the sender, the recipient, or a third party.

Document transfers between document senders and receivers are enabled by way of a network like the Internet but as set forth above, such transfers also might be accomplished using a local area network, a wide area network, an Ethernet network as well as the plain old telephone system sometimes referred to as the public switched telephone network. In instances where the data network 102 is the World Wide Web of the Internet, a web browser program executing on a subscribers computer 108 provides access to "web sites" that are embodied by other computers 104 coupled to the web, including the computer(s) of a document provider, identified in Figure 1 by reference numeral 110.

By way of example, a subscriber's computer 108 might request the computer of a content provider 110 to transfer to it, some sort of electronic file 112, embodying a document that might include a work of art, a memorandum, or perhaps a negotiable instrument or airline tickets for example. Upon being printed, such a document has economic value to either the sender (not shown) or the recipient of the document (not shown).

Using the Internet 102, an intended recipient of a document, considered herein to be a document requestor, can request from a sender's computer 110, the transmission of a file 112 from the sender's computer 110 via the Internet 102 to the recipient's computer 108. If the recipient's computer 108 has the requisite application program by which the transmitted file 112 can be opened and printed, printing the document 114 that was embodied as an electronic file 112 is readily accomplished using an appropriate printer 116 coupled to the recipient's computer 108.

In the preferred embodiment of this invention, the recipient's computer 108 and the printer 116 are equipped with, and capable of using, the "Serialized Original Print" technology. As such, the printer and associated system provide for verification that a document was printed by a particular printer and also, where desired, may provide verification marking for each original printed copy of the document. The method provides for verifying that a document was printed using a printer with a printing subsystem having a printhead cartridge with a unique printhead cartridge identifier and having a printhead electronically coupled to a computer. One embodiment of the method includes generating, by the computer, a unique document identification composite of electronic form characters utilizing the unique printhead cartridge identifier and transmitting the unique document identification composite to the printing subsystem for printing thereof on each print media sheet of the document The method may further include generating predetermined registration marks and transmitting the predetermined registration marks composite to the printing subsystem for printing thereof on each print media sheet of the document. Also, where desired, the method may further include generating at least one predetermined scar/intentional aberration and transmitting the predetermined scar/intentional aberration composite to the printing subsystem for printing thereof on each print media sheet of the document

In one embodiment, the unique document identification composite may include at least a serial number of the unique printhead cartridge identifier and may be generated as is known in the art. In addition, the unique document identification composite may include a date that the document is printed and/or a time that the document is printed. Clearly, the unique document identification composite may be composed of any desired identifiable components. The composite may be printed on the front side, the back side or both sides of the document. In a preferred embodiment, the unique identification composite is printed on the print media sheet prior to printing the content. Where desired, the unique document identification composite may be stored in a storage medium. In certain embodiments, the user may select the unique document identification composite that may be read by humans. Alternatively, or in combination with the human-readable composite, a machine-readable unique document identification composite may be implemented. For example, a bar-scannable, or any other desired machine-readable unique document identification composite may be used.

In addition, where desired, the composite may include a designation that indicates which copy of the document was printed. For example, an original print of the document may be given a unique document identification composite of:
00000010-0000-0010-8000-00AA006D2EA
(in addition, individual characters may be of different colors, thus encoding the visual data even more).

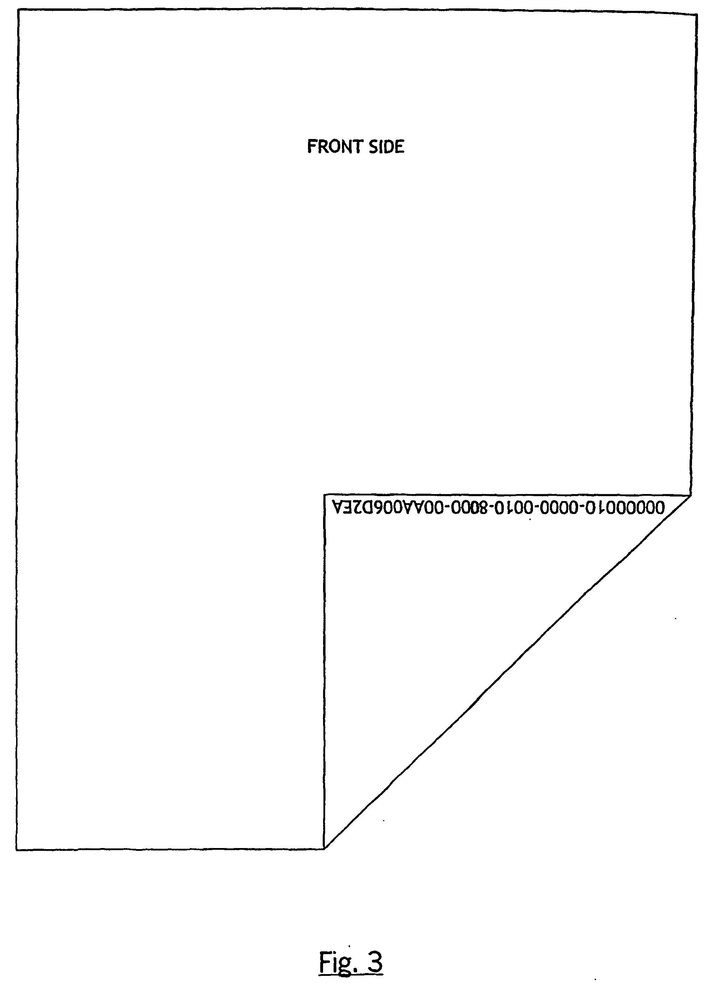

In one embodiment, a first copy may be designated 00000010-0000-0010-8000-00AA006D2EA.1, a second copy may be designated 00000010-0000-0010-8000-00AA006D2EA.2, and so forth. Thus, the unique document identification composite may be a unique serial number so that, for example, when a user photocopied or faxed the original to another, a corner could be folded over to show the unique serial number as verification that a facsimile of the original document was being transmitted as shown in Figure 3. Clearly, succeeding copies may be designated by Arabic numerals, Roman numerals, character/characters of an alphabet, or any desired designation.

In a preferred embodiment, each Page or Printed UID increments a counter in the RAM, and a Next request to print a serialized original print will result in a number (UID) that changes to reflect the next print.

It is not essential that the "Date/Time" be different to print a new number.

For instance, the copies 2,3,4... will all be printed after 1 but the UID will be the same for the request. For a multi-copy printing system, when jobs may be printing at the same point in time, they then need to identify each print job within the printer/printing system.

The "Printers Serial number" and Manufacture and Model number will be included in the UID encoding, so "Printed qualities" can be compared when looking for counterfeits. The UID contains critical information on the writing system and its known aberration when printing.

The requesting Print request can supply information (such as JOB ID) that will be included in the UID; thus the UID number will have a meaning for the users requesting the print. For example, for the UID given in the example above:
00000010-0000-0010-8000-00AA006D2EA
a JOB ID may be 00000010 for job# 10 from the computer that was requesting the print. The printer (or controller in the printer) generates the rest of the UID. Where desired, the UID may be selected to include one or more of: a serial number of the unique printhead cartridge identifier, a model number, a company that is printing the document, and a media on which the document is being printed.

Where selected, registration marks identifiable with the printhead cartridge may be printed on a front side, a back side, or both sides of each print media sheet. Registration marks are typically printed on both sides of a document page such that, when held up to a light, the registration marks would align, so that, together with an intentional scars, the registration marks would be proof of the originality of the page. The HP 970 places registration marks accurately by using a photo-scanner to sense the position of the paper after it is tumbled for duplexing media registration. The printer used for printing registration marks may be, for example, an ink jet printer such as the HP 970 or any other printer that is capable of accurately positioning registration marks.

Further, aberrations or "scars" may be printed which are identifiable under magnification. An aberration may, for example, be a predefined spacing between lines, words or the like, that enables differentiation of documents. For example, the HP 970 made by Hewlett Packard has a printhead positioning mechanism that can sense the edge of the paper and position itself within 1/1200 of an inch and print a "scar". Since the HP 970 can also print on the edge of the paper and edge marks are often clipped by photocopiers or other copying device, the edge marks may be used to aid in identification of original documents. Typically, such a scar can only be seen under magnification. "Scars" may, for example, be a space between a horizontal and vertical line, or periods which are actually small stars, but which, when photocopied, appear as periods, i.e., a photocopier does not have the capability to reproduce the aberrations without damaging them. Again, these aberrations or "scars" may be printed on a front side, a back side, or both sides of each print media sheet.

Thus, the present method may be implemented by software that marks original prints. The software directs the printer to print a scar (anti-counterfeiting), intentional aberration, on a page. The scar is undetectable to a typical photocopier or other copying device. The software also causes a unique document identification composite to be printed on at least one side of the document page/print media sheet. There may also be alignment marks on the front and back of the document page to facilitate differentiating the original document from a copy of the original document. The printer is set to allow each serial number/composite to be used only once, typically by use of a small flash RAM in the printer that is not resetable.

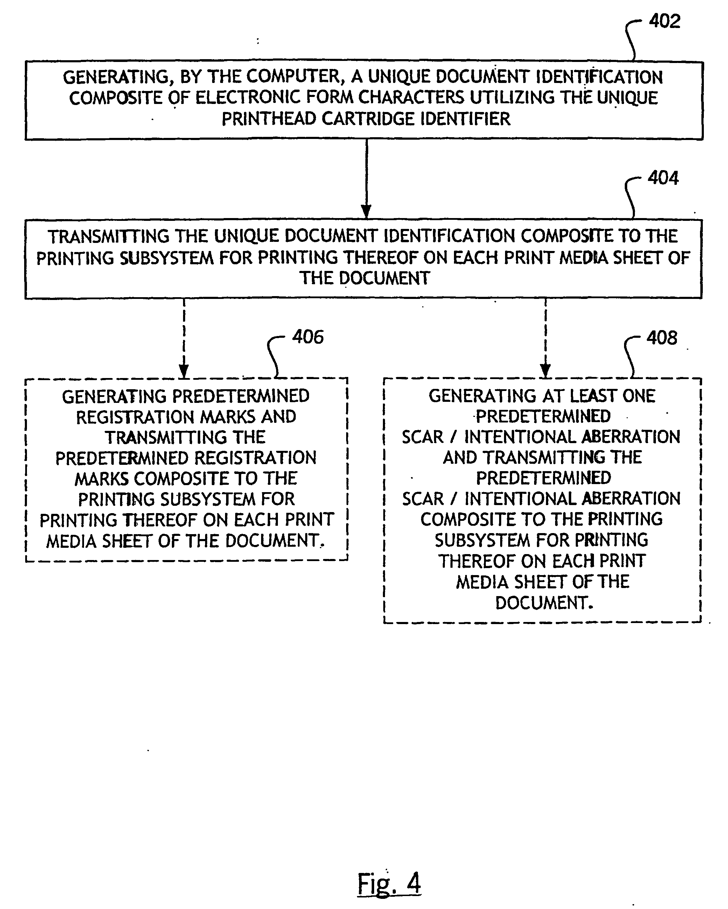

As shown in the flow chart of figure 4, an embodiment of a computer-directing method includes the steps of: generating 402, by the computer, a unique document identification composite of electronic form characters utilizing the unique printhead cartridge identifier and transmitting 404 the unique document identification composite to the printing subsystem for printing thereof on each print media sheet of the document where desired, the steps may further include generating predetermined registration marks 406 and transmitting the predetermined registration marks composite to the printing subsystem for printing thereof on each print media sheet of the document. Also, where desired, the steps may further include generating at least one predetermined scar/intentional aberration 408 and transmitting the predetermined scar/intentional aberration composite to the printing subsystem for printing thereof on each print media sheet of the document.

Thus, the printer 116 generates a unique serial number, bar code or encoded data (hereafter, serial number) for the document 114 in the course of printing the file 112. The serial number generated by the printer 116 is of paramount importance in verifying to a document sender that the file 112 was received at the computer 108 and at least partially printed.

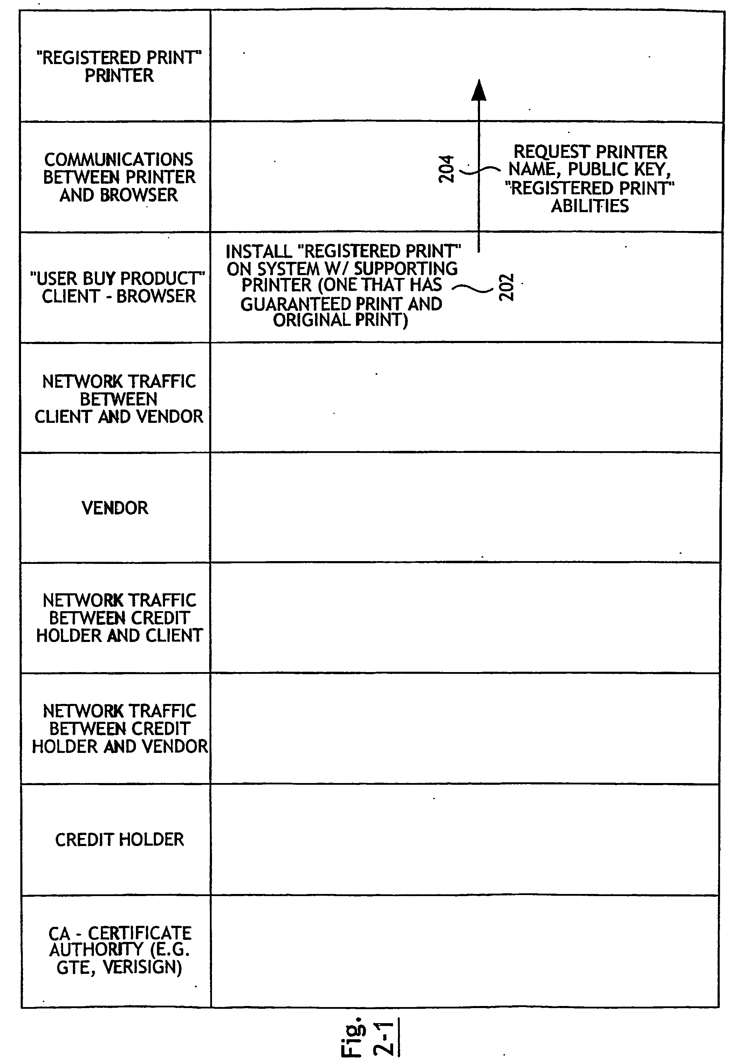

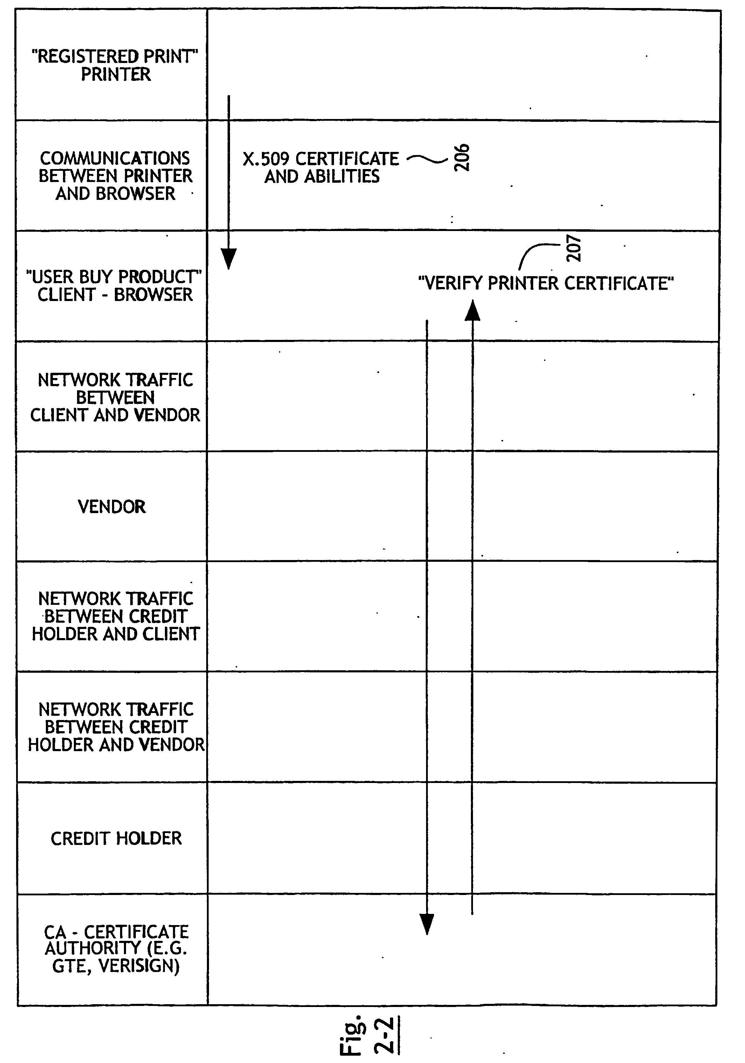

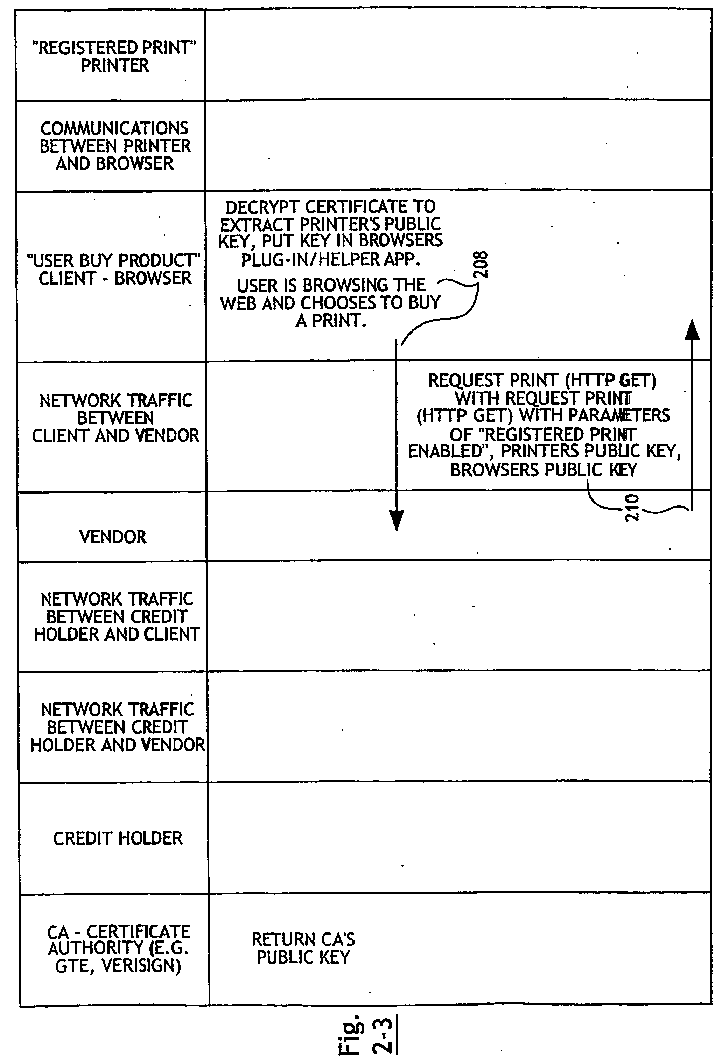

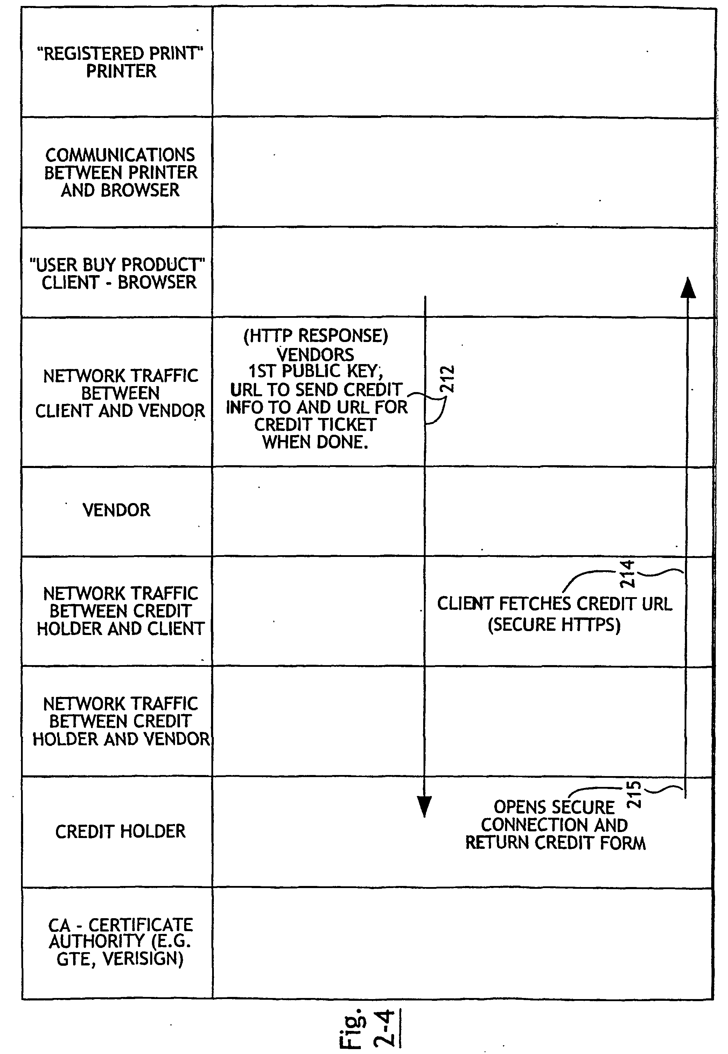

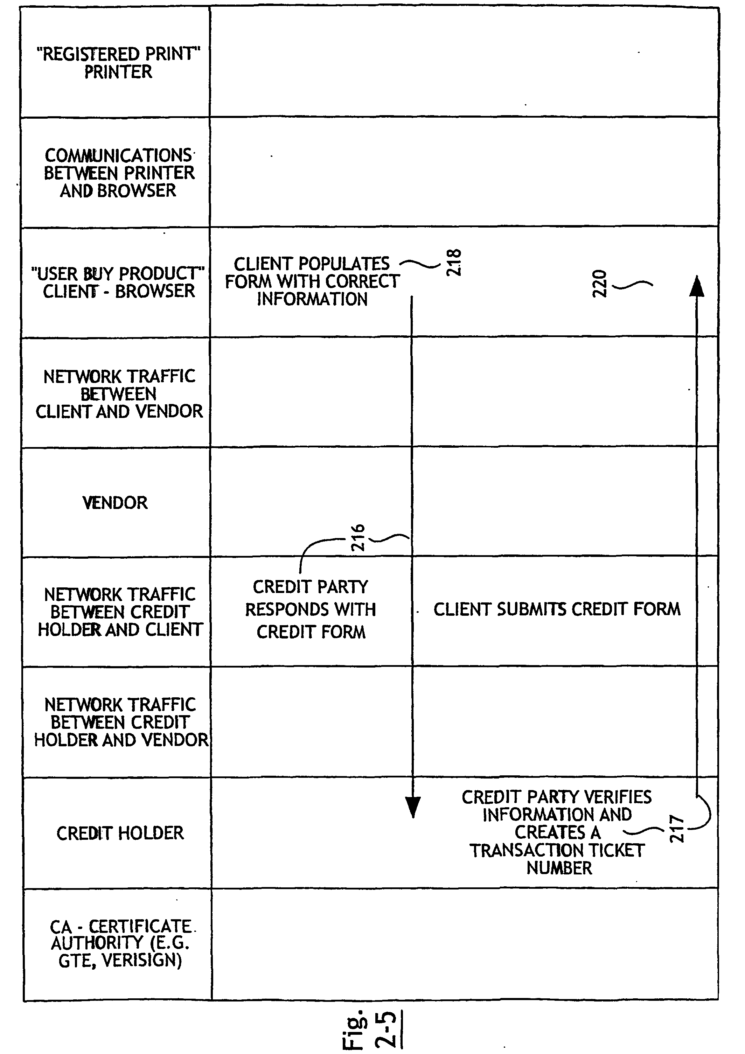

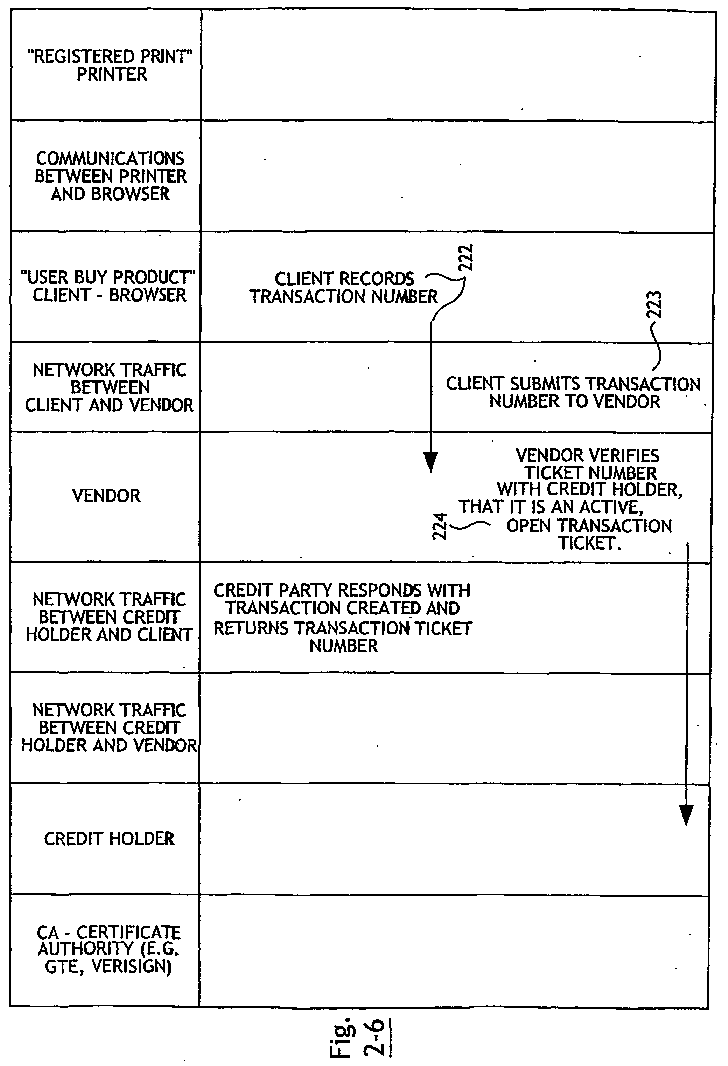

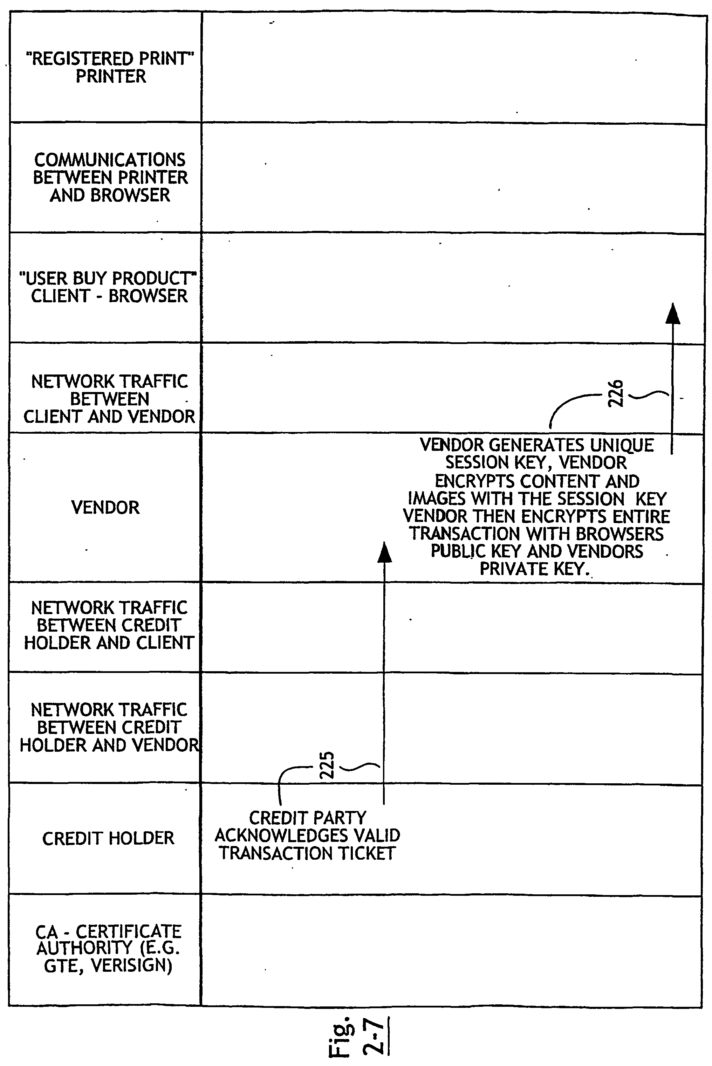

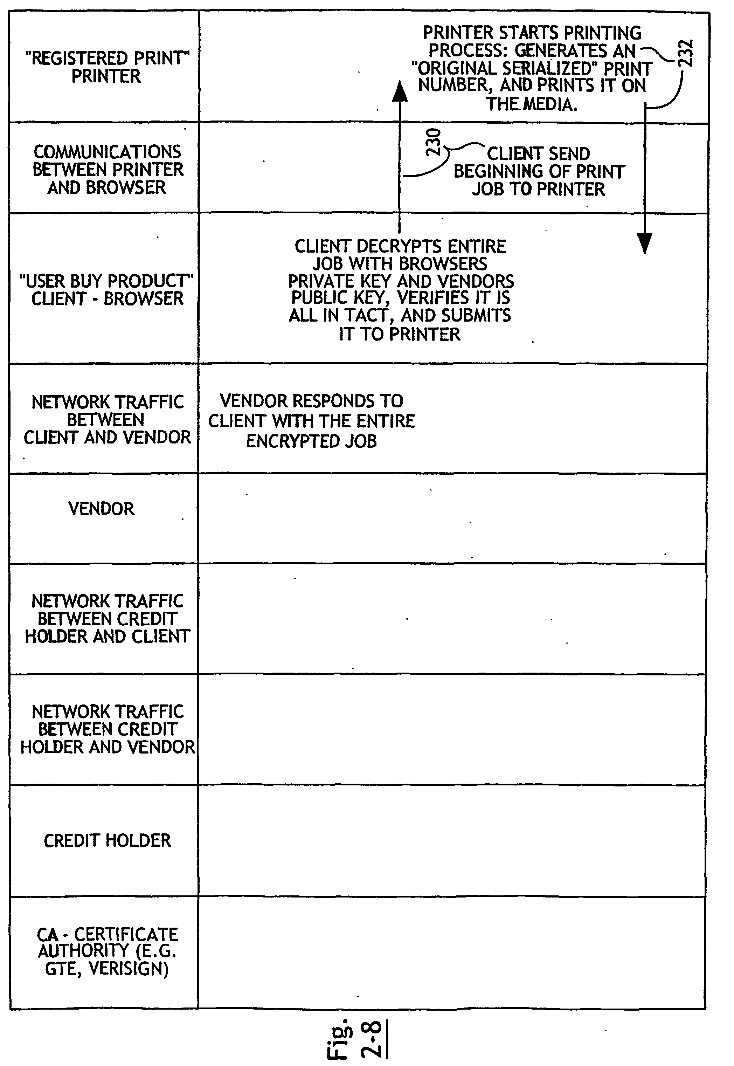

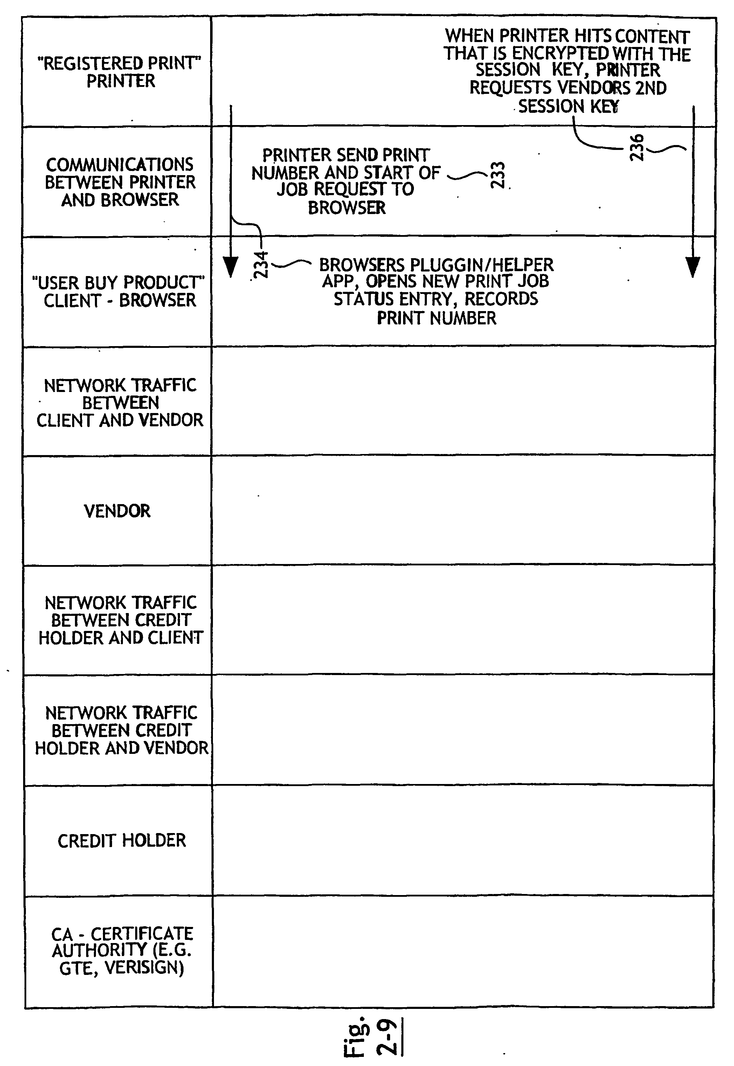

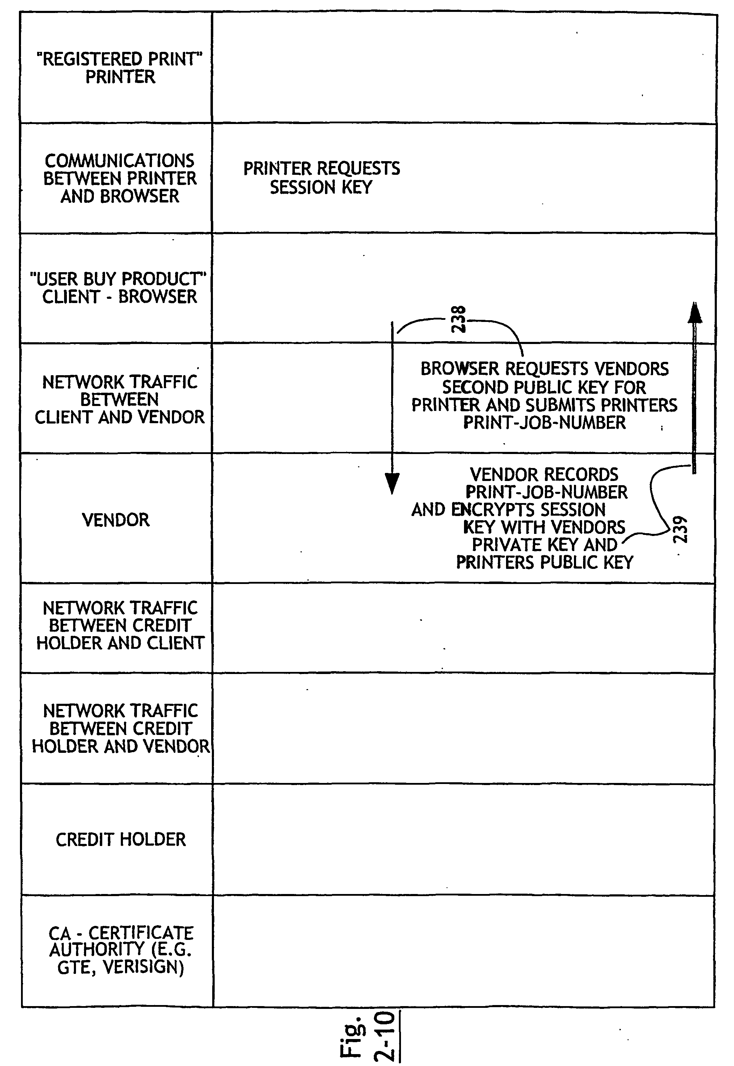

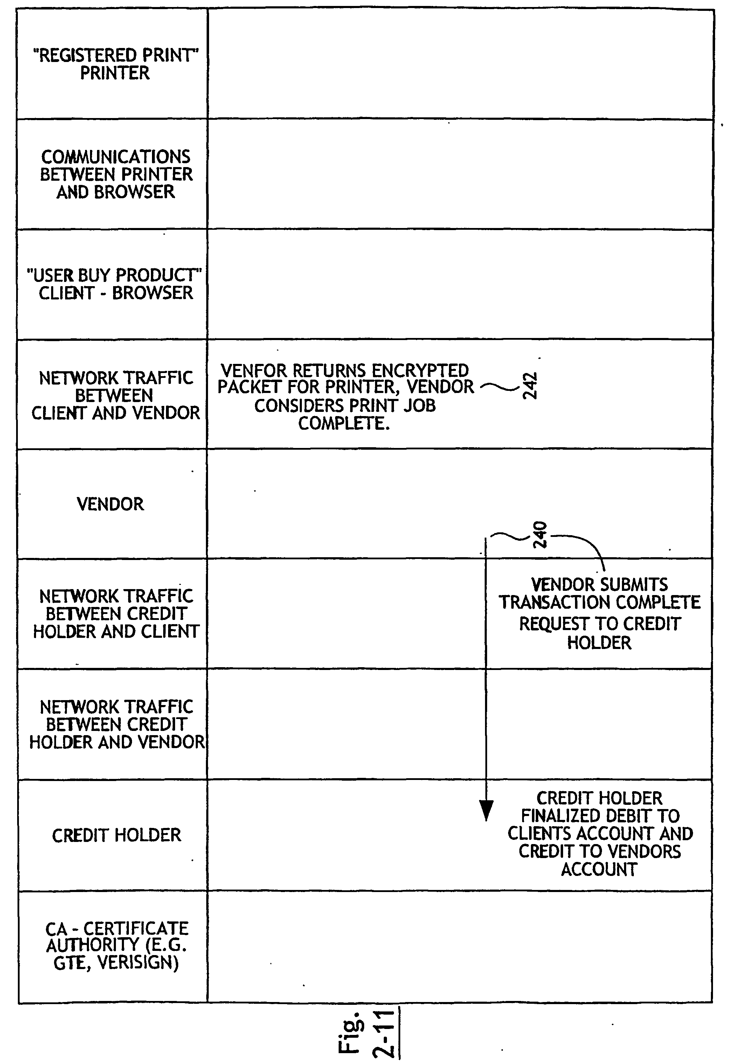

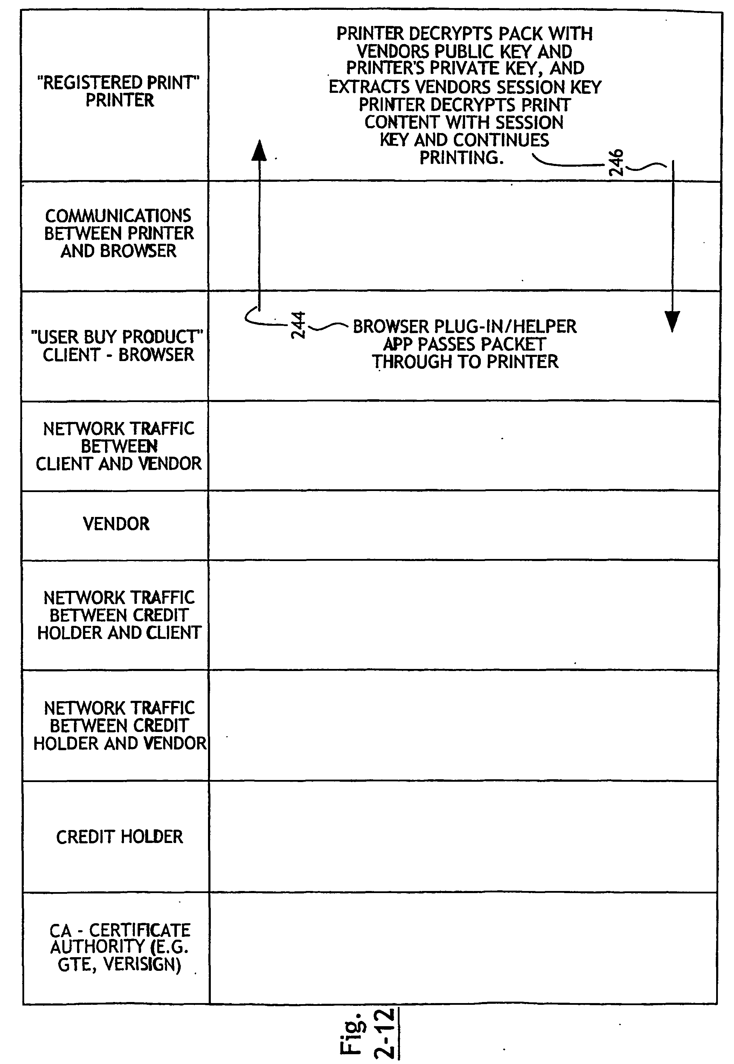

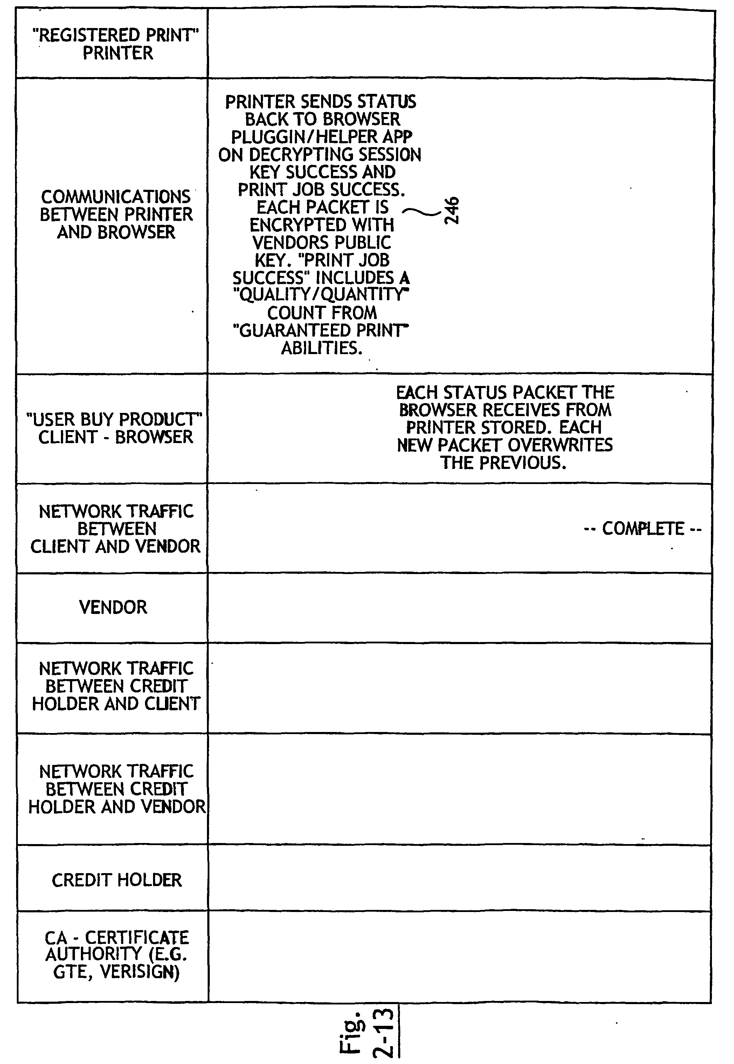

Figures 2-1 through 2-13 shows a data flow diagram depicting the steps of the method described herein.

In Figure 2-1, as an initial matter, the software capability to guarantee output print quality and to produce a serialized original print needs to be installed on the recipient's computer 108 as well as on the sender's computer 110 as depicted in step 202. Assuming that such software capabilities have been installed on the respective first and second computers, the recipient's (i.e. second) computer 108 will request from the printer 116 an encryption key for public distribution (i.e. a public encryption key) in the format of an X.509 certificate, which might be embodied as a serial number, a model number or combination thereof obtained from the printer in step 204 in Figure 2-1.

In Figure 2-2, when the printer returns an X.509 certificate and data as that identifies the capabilities of the printer at step 206, the user's computer installs the public key on a browser plug-in file, known to those skilled in the art.

Information about the X.509 standard is available from a variety of sources, including the National Institute of Standards and Technology web site, the URL of which is: http://csrc.ncsl.nist.gov/. An X.509 certificate serves as an electronic credential over the Internet for individuals and computer services (Web sites). X.509 certificates are used in the same way as birth certificates, passports or drivers' licenses to validate the identity of individuals for Web site access, communication and electronic commerce.

An individual wishing to send an encrypted message applies for a digital certificate from a Certificate Authority (CA). The CA issues an encrypted digital certificate containing the applicant's public key and a variety of other identification information. The CA makes its own public key readily available through print publicity or perhaps on the Internet.

The recipient of an encrypted message uses the CA's public key to decode the digital certificate attached to the message, verifies it as issued by the CA and then obtains the sender's public key and identification information held within the certificate. With this information, the recipient can send an encrypted reply. The most widely used standard for digital certificates is X.509 which is the technology used by this merchant.

The X.509 is believed to be the most widely used standard for defining digital certificates. The X.509 standard for digital certificates binds the identity of a person or organization to an electronic identification key. The digital certificate contains information about its owner, its issuer, issue and expiration date stamps, and information for verifying the integrity of the certificate that can be used for digital IDs, digital signatures and electronic fingerprints.

By executing an HTTP (hypertext transfer protocol) "GET" command, the user's web browser (e.g. Internet Explorer™ or Netscape™) running on the user's computer (i.e. the second computer) requests verification of the printer's public key from a security key issuer, which then posts the answer of authenticity of the printer's public key using a "PUT" in step 207. In Figure 2-3, in step 208, a "certificate" from a printer capable of practicing what is termed "guaranteed print is decrypted and the printer's public key is installed (or copied) into the document purchaser's web browser. A decision to buy a document is formatted and sent to the vendor 210 conveying the capabilities of the printer, i.e. that the printer is guaranteed print capable.

Ensured output print quality, i.e. guaranteed print, is achieved in a preferre3d embodiment by using an optical scanner to read printed output (i.e. images formed from ink or toner). Electrical signals from the optical scanner are compared (by the associated computer or by a processor within the printer) to signals from the computer (and which representing what should have been printed) to determine whether the actual printed output is an accurate reproduction of what the computer sent to the printer. Whether the printer is printing graphics images (photographs, pictures, etc.) or alphanumeric characters (letters, numbers, typographic symbols, etc.), to the printer, all printed images are formed from individual dots or pixels. Ensuring the output print quality of any sort of image is achieved using the same process or optically scanning what was printed and comparing the scanned image to what the printer was instructed to do.

With respect to the comparison of the scanned images and how the scanned images compare to what the printer was instructed to print, there will typically be a correlation or calibration of the scanner's signals to the signals sent from the printer because the nature of the output signals from the scanner will be different from the signals sent to the printer from a computer. The correlation of optical scanner signals to printer control signals will of course depend upon the nature of the scanning device as well as the nature of the control signals sent to the printer and will typically require processing of the scanner output signals or processing of the printer control signals. Because the scanned image will rarely, if ever, identically match the image that a printer was instructed to print, as part of the comparison process, various user-definable differences between the scanned image and the intended image can be programmed into the processor performing the comparison in order to be able to increase printer yield and have a workable printer product.

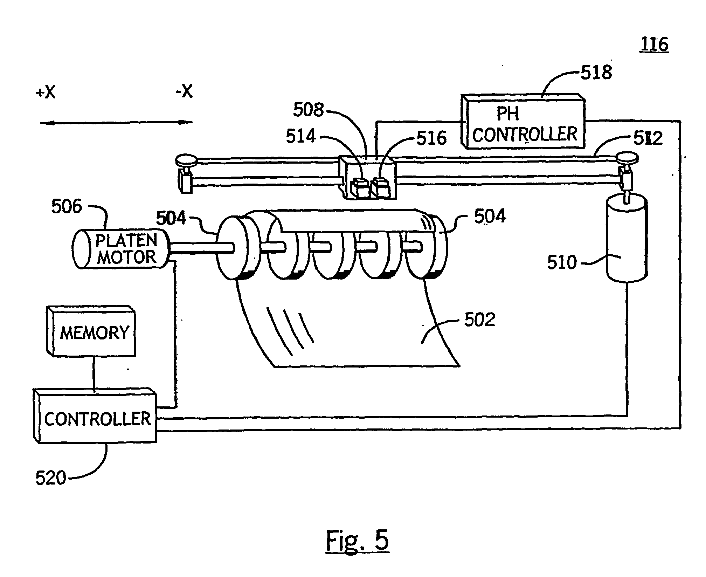

Figure 5 shows a representative depiction of the working components of the printer 116 shown in Figure 1. In Figure 5, a piece of print media 502, which might include paper or transparency sheet, is urged by one or more rollers or platens 504 under the control and operation of a platen motor 506. The platen motor 506 rotates the platens or rollers 504 to move the print media 502 under a translating (i.e. reciprocating) print head 508 that moves in two directions along an x axis under the control of a print head step or control motor 510.

A continuous drive belt 512, to which the print head 508 is attached, is rotated by the print head stepper motor 510. The movement of the drive belt 512 acts to position the print head 508 along the x axis such that ink or toner can be deposited onto the print media 502 from one or more print heads 514 that include for example a thermal inkjet print head or piezo inkjet print head, well known to those skilled in the art.

An optical scanner 516 is positioned along side the printhead 514 (only one being depicted) such that the scanner 516 is capable of optically scanning images that are printed by the printhead 514. In alternate embodiments two or more multi-color print cartridges can be used wherein the scanner 516 would scan images produced by all of the cartridges.

Control signals to the print mechanism 508 are provided by a printhead controller 518, which interfaces the printhead mechanism 508 including the scanner 518 and the print cartridge 514 to a printer controller 520 (which may be coupled to a user's computer, not shown). As such, the print mechanism controller 518 is used to control the printhead cartridge 514 in order to print an.image, while it controls the optical scanner 516 to read what was printed as the printhead mechanism 508 is moved over the just-printed image.

As the optical scanner 516 scans images that are just printed, electrical signals it produces are fed back through the printhead mechanism controller 518 to the printer controller 520, and back to the user's computer via a cable. In an alternate embodiment, signals from the scanner are processed in the controller or other processor within the printer. If the signals from the scanner show that the printed output does not correspond to what was "printed" by the computer, further printing can be suspended until the cause of the output defect(s) is determined and corrected.

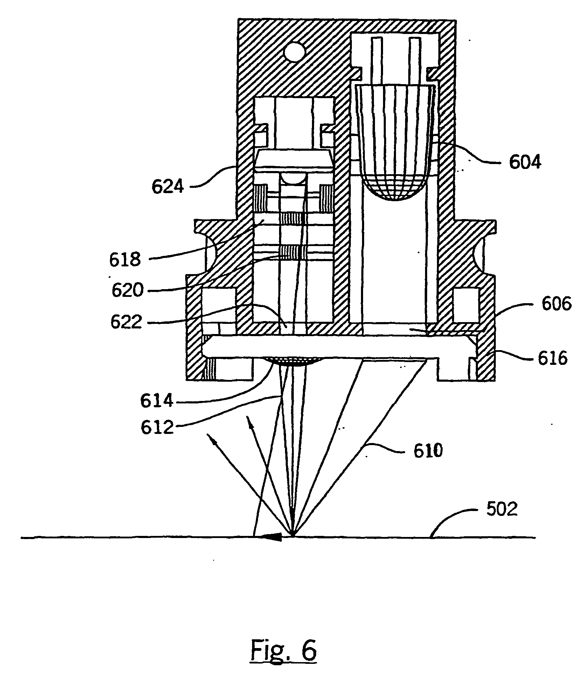

A representative depiction of an optical scanner 516 is shown in Figure 6 where print media 502 has already been printed with an image or portion thereof. A light source, such as an LED (light emitting diode) 604, illuminates the media 502 by light in either visible or invisible portion of the spectrum. Other light sources such as a broad-spectrum bulb (not shown), the light of which is conducted into the print mechanism via fiber optic cable (not shown) could also be used. Light waves from the LED 604 exit from an orifice 606 in the optical scanner 516 and travel therefrom in all directions. At least some of the light from the LED 604 is projected onto a portion of the print media 502 where an image to be scanned is illuminated by the light waves 610 from the LED 604. Upon reflection from the media surface, these light waves 610 are reflected 612 back through a collimating lens 614 in the optical scanner housing 616.

The first collimating lens 614 works with a three-hole collimator 618, 620 and 622 to collimate the reflected light 614 onto one or more photo diodes 624 from which electrical signals are generated representing the present or absence of an image immediately below the optical sensor 516.

Signal processing electrical signals from optical sensors in printers is disclosed in the literature including for example US Patent No. 5,289,208 to Robert D. Haselby for an "Automatic Print Cartridge Alignment Sensor System" issued February 22, 1994 and assigned to Hewlett-Packard Company, the assignee thereof. Methods such as the one disclosed by Haselby could be used to determine where the print mechanism is or sees. Upon the detection or sensing of an image on the media 502, by the optical scanner 516, the electrical signals generated by the photo diode can be appropriately processed using for example processes similar to that disclosed by Haselby to determine whether or not an image on the media 502 is correctly printed or printed at all. The electrical signals from the optical scanner 516 can be processed either within the printer 116 or sent back to the originating user's computer for evaluation.

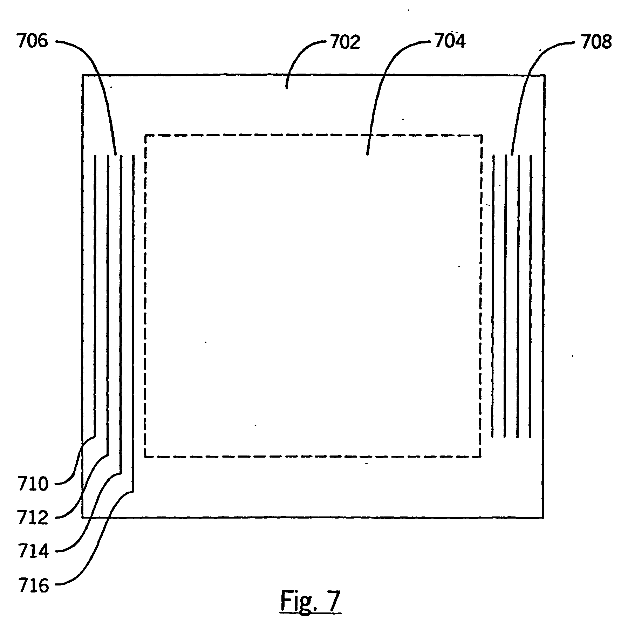

In one embodiment, readily-detectable and processed registration marks are printed in the margins of an image either before and/or after each line of the image is printed by the printhead mechanism. Figure 7 shown an exemplary sheet of medium, i.e. paper, 702 and the printable area 704 where an image or text is typically printed by a printer. The printed page 702 includes a printable area 704 along side of which are left and right hand margins 706 and 708, respectively. As one registration mark or line is printed in one margin, the print mechanism can either continue printing the same line or print a subsequent line as the platen moves the media under the print mechanism. In either fashion, a registration mark is printed and scanned, either before or after a line of output is laid down.

As shown in Figure 7, a registration mark printed in either one or both of the margins 706, 708 on every pass of the printhead over the printed page will create vertical lines 710, 712, 714, and 716 corresponding to the cyan, magenta, yellow and black inks that are normally used in the most color printers. Stated alternatively, as the print mechanism traverses across the medium 502, the paper is indexed under the control of the platen motor 506 to position a different portion of the print medium 502 under the printhead mechanism 508. If the registration marks printed by the printhead mechanism 508are comprised of at least one pixel of each color the resultant output printed registration mark will be a series of vertical lines printed in the margins. In Figure 7, reference numerals 710, 712, 714 and 716 represent the individual colors that would be printed from a four color print mechanism.

In an alternate embodiment, the optical sensor or optical scanner can be used to continuously scan an image in a printed image area on a piece of print media.

As the printhead traverses the printed area of the image, the optical scanner can read individual portions of either the individual pixels of an image or the printed alphanumeric characters. The resultant electrical signals produced by the optical scanner can be read back by a computer within the printer or sent back to the processing and controlling computer for analysis. By reading spectral qualities of the registration marks or other images, such as hue, luminance, saturation and the like, over-all output quality can be truly maintained in real time.

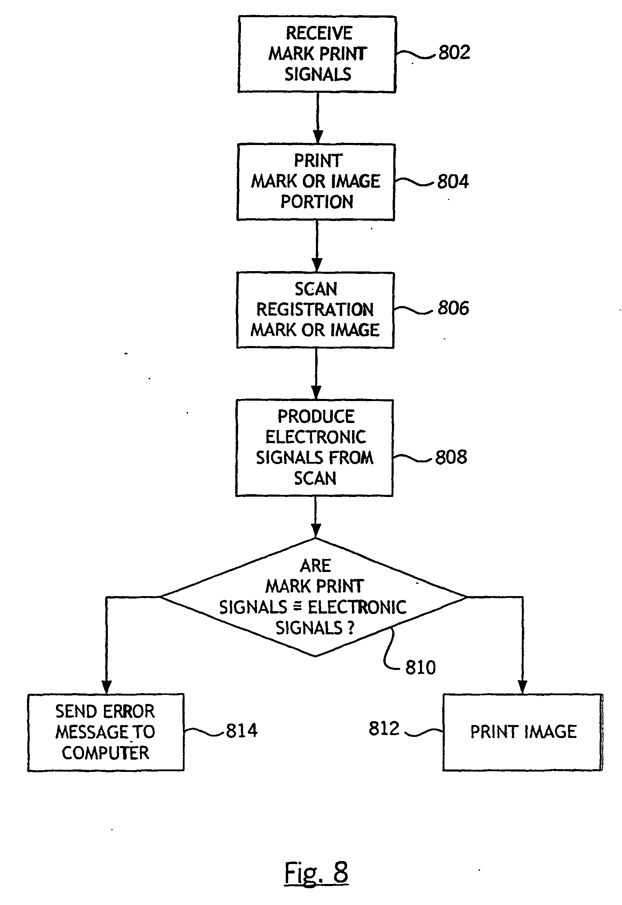

Figure 8 shows a flow chart depicting the steps of the methods disclosed herein whereby output print quality is insured. The printer receives printer control codes and print data (i.e. print signals) 802 from the computer, the printer prints 804 either a registration mark or portions of an image to be printed in response to the print signals 802 sent to the printer.

After the registration mark (or image portion) is printed, the mark (or image portion) is optically scanned 806. Signals from the scan 808 are read into either the printer controller or sent back to the computer sending print signals to the printer for analysis. Signals from the scan 808, which represent the image that was actually printed, are processed and compared 810 to the signals 802 that were sent to the printer such that a determination can be made whether the image that was actually printed is acceptable, i.e., is the output good enough? If the signals from the scan and the signals to the printer compare favorably, printing can continue 812, including any real-time adjustments to the printer output that might be needed as determined from the comparison 810. If the comparison of the printed image to the print signals show that the output quality is poor, an error message or warning can be generated to the user or to the computer to inhibit further printing until the cause of the output quality failure is identified and corrected 814.

In Figure 2-4, the document vendor's computer's response 212 is to transmit a file (identified in Figure 1 by reference numeral 112) at least part of which is encrypted at least once using a so called public key of the vendor's computer (identified in Figure 1 by reference numeral 110) and preferably also encrypted using a uniform resource locator (URL) address to which credit or payment information is to be sent by the buyer.

In an alternate embodiment, only part of a document is encrypted prior to transmission and using only one key. By encrypting only part of a document (i.e. up to a predetermined point) prior to transmission, at least the unencrypted portion of the document can be printed at the destination, without a decryption key, thereby establishing. In such an embodiment, a decryption key eventually needs to be provided. By holding back the decryption key pending receipt of payment - and perhaps proof that at least part of the document was satisfactorily printed using for example the guaranteed print methodology, a document vendor can protect its interest in the document by withholding the key until payment has been received by the vendor.

In step 214, the document buyer's computer (i.e. the second computer 108) optionally retrieves the URL of a credit agency and performs a secure hypertext transfer protocol transfer providing payment information to a financial organization or other credit provider effectuating the transfer of funds for the payment of the file from the vendor. A credit approval transfer form 216 is optionally returned to the buyer and enables the buyer to populate the form with pertinent credit information by which the credit provider can make payment to the vendor in step 218, shown in Figure 2-5. If the credit transaction is validated by the credit provider as set forth in step 220, the transaction can be memorialized by the buyer's computer and thereafter forwarded to the vendor in step 222, shown in Figure 2-6.

The document vendor can electronically verify with a credit provider, e.g. www.cybercash.com, in step 224 that the document purchaser has funded, or can otherwise pay for the transaction and, in response thereto, the credit provider can provide an appropriate acknowledgement 226 to the vendor, as shown in Figure 2-7. Upon verification that payment will be received by the document vendor, the vendor optionally encrypts the information content of interest, using the document vendor's private key and a second key (also known as a session key) and sends the doubly encrypted file to the purchaser in step 228. (Public key/ private key encryption and decryption mechanisms are well known. Disclosure or understanding of that technology is not germane to the invention disclosed herein. Alternate embodiments of the invention include singly encrypting the file using a single encryption key, which as an example could be the document vendor's private key, a purchaser's public key or some other encryption key by which the document could be secured against theft in transit across a data network or by the document recipient.)

In Figure 2-8, using his own private decryption key, the purchaser decrypts the file and verifies that the received file is intact and sends the file to the printer 116 for printing in step 230. The printer will begin printing the file and in the process generate an original serialized print number as set forth in the aforementioned patent application for the serialized print methodology in step 232. The serial number generated by the printer will be printed and also sent to the browser of the purchaser's computer in step 234, shown in Figure 2-9. The browser also records the serial number of the print job in progress for subsequent use.

As the printer 116 continues following the instructions from the computer 108 to generate output, eventually the printer 116 or the computer 108 encounters information in the file 112 that is encrypted with the vendor's second key. Upon determining that further printing will be inhibited absent the other decryption key, the printer, using the methodology disclosed in the serialized print application, requests the second key in step 236 from the user's computer, Figure 2-9. In step 238, Figure 2-10 the user's browser transmits a request for the second key to the printer or in this case the vendor's computer 110 and as proof that the job has been at least partially printed includes the serialized print number generated by the printer in step no. 232.

Upon receipt of the original serial print number generated in step 232 by the vendor's computer 110 in step 238, the vendor can assume that at least part of the document file 112 was printed from the printer 116 and was fully and successfully received by the computer 108. The vendor can record the serialized print number in a database for billing purposes or for billing credit purposes.

The vendor can also optionally submit the transaction complete signal in step 240, Figure 211, to the credit provider as a means for justifying the receipt of payment from the credit provider. Upon receipt that at least part of the document has been printed, the credit provider can debit the purchaser's account and credit the vendor's account accordingly.

In order to complete the printing job, the vendor's computer 110 needs to return to the purchaser's computer 108, the second decryption key in step 242 or a session key, that the printer can use for decrypting the content. The second key is encrypted so only the printer can decrypt it. This is generally done using the printer's public key and the vendor's private key. Upon receipt of the second key, the browser running on the purchaser's computer 108 passes the second encryption key to the printer in step 244, which enables the printer to decrypt the key and finish the print job it started in step 230 by decrypting the document and printing it. In step 246, the printer can send status information back to the browser of the purchaser's computer 108 informing the purchaser's computer 108 and possibly the browser of whether or not the entire print job was successful.

By using the guaranteed print methodology, the printer 116 can provide an objective measurement of the output print quality. A printer employing the guaranteed print methodology is referred to herein as a printer that is capable of guaranteeing output print quality.

Using the methodology disclosed in the aforementioned method and apparatus for insuring output print quality, the printer 116 depicted in Figure 1 can, in real time, compare what was printed to what was sent 112 and determine whether or not the purchaser got what he or she bargained for. Using that technology it is possible to create a numeric index of the relative output quality of a print job from a printer.

If output print quality was determined to be unsatisfactory or failed altogether, the printer 116 can send an appropriate error message to the vendor or the vendor's computer 110 informing the vendor that the output print quality was defective. In the event that an output print job did not successfully complete in its entirety, or was otherwise disturbed or defective, the vendor can impede retransmission of the file 112 until it physically receives all of the output that was printed by the printer 116.

By way of data recovered using the method and apparatus for insuring output print quality, the vendor can know precisely how much of the document file 112 was actually printed 114 and refuse to provide another copy of the document until physical receipt of the output print material is received in hand that has the serial number, bar code or encoded data in step 234.

Public and private encryption key technologies are well known to those skilled in the art. Alternative embodiments of the invention would include using proprietary keys of both the purchaser and the vendor. By using a publicly available key however, it is possible for the document sender to encrypt a file with a public key enables the document recipient to decrypt it using his private key. Commercially available public/private encryption software is readily available.

It should be apparent that by using the methodologies disclosed herein, that valuable documents can be transferred via data networks with some sense of security and with some sense that unauthorized reproduction of a document will be impeded. Similarly, valuable content for which value was received need not be retransmitted absent proof by the sender that the intended output was not successfully realized.

## Claims

1. A method to control and assure printing of a document file delivered via a computer network comprising the steps of:
at a first computer: encrypting at least a first portion of a document file using at least a first encryption key thereby creating a partially encrypted file (226), and transmitting the partially encrypted document file to a second computer via said computer network (226);
at said second computer: printing at least a second portion of said partially encrypted document file using a serialized print methodology (246), which includes the steps of generating by a print device printing said decrypted document file, a number correlating said decrypted document file to said printing device (232), and returning said number to said first computer thereby enabling said second computer to receive said first encryption key (232);
returning to said first computer, a serialized print number and receiving, in response thereto, said first encryption key (232, 239);
decrypting said first portion of said partially encrypted file to create a decrypted document file;
printing said decrypted document file (246).

2. The method of claim 1 further including steps of:
before transmitting the partially encrypted document file to a second computer, encrypting at least part of said partially encrypted file to form a twice-encrypted file using a second encryption key (226); and
prior to printing at least a second portion of said partially decrypted document file, decrypting said twice-encrypted file using at least one of either said second encryption key or a third encryption key (230)

3. The method of claim 1 further including the step of: printing at least a portion of said partially decrypted document file using a guaranteed print method, wherein said second portion is printed in response to a first set of print signals and including the steps of:
optically scanning said printed second portion on a media by a scanner, thereby producing a second set of print signals representing said printed second portion that was printed on said media,
comparing said first set of print signals to said second set of print signals, and
enabling the returning to said first computer step upon the determination that said portion of the image was properly printed.

4. A system for controlling and assuring the printing of a document file delivered via a computer network comprising:
a first computer (110) adapted to encrypt at least a first portion of a document file (112) using a first encryption key;
a data transfer device (102) coupled to said first computer capable of transferring the partially encrypted document file to a second computer;
a print device (116) operatively coupled to said data pansfer device, said print device adapted to receive said document file (112) and decrypt at least a portion of said first portion of said document file and controllably print said first portion using at least means for generating a number correlating said printed portion to said print device and means for transmitting said generated number via said computer network.

5. The system of claim 4 wherein said print device is comprised of a computer operatively coupled to a printer.

6. The system of claim 5 wherein said print device further comprises:
a. a printhead coupled to a print device position controller;
b. an optical scanner operatively coupled to said print device
c. a controller having an input for receiving printing control signals from the computer, an input for receiving signals from said optical scanner and an output coupled to said print device position controller, said controller adapted to compare the printing control signals received from the computer to signals from said optical scanner representing an image that was actually printed.

## Patentansprüche

1. Ein Verfahren zum Steuern und Sicherstellen eines Druckens einer Dokumentdatei, die über ein Computernetzwerk geliefert wird, das folgende Schritte aufweist:
an einem ersten Computer: Verschlüsseln zumindest eines ersten Teils einer Dokumentdatei unter Verwendung zumindest eines ersten Verschlüsselungsschlüssels, wodurch eine teilweise verschlüsselte Datei (226) erzeugt wird, und Senden der teilweise verschlüsselten Dokumentdatei an einen zweiten Computer über das Computernetzwerk (226);
an dem zweiten Computer: Drucken zumindest eines zweiten Teils der teilweise verschlüsselten Dokumentdatei unter Verwendung einer serialisierten Druckmethodik (246), die die Schritte eines Erzeugens einer Nummer, die die entschlüsselte Dokumentdatei mit der Druckvorrichtung (232) korreliert, durch eine Druckvorrichtung, die die entschlüsselte Dokumentdatei druckt, und eines Zurücksendens der Nummer an den ersten Computer umfasst, wodurch der zweite Computer befähigt wird, den ersten Verschlüsselungsschlüssel (232) zu empfangen;
Zurücksenden einer serialisierten Drucknummer an den ersten Computer und ansprechend darauf Empfangen des ersten Verschlüsselungsschlüssels (232, 239);
Entschlüsseln des ersten Teils der teilweise verschlüsselten Datei, um eine entschlüsselte Dokumentdatei zu erzeugen;
Drucken der entschlüsselten Dokumentdatei (246).

2. Das Verfahren gemäß Anspruch 1, das ferner folgende Schritte aufweist:
vor dem Senden der teilweise verschlüsselten Dokumentdatei an einen zweiten Computer Verschlüsseln zumindest eines Teils der teilweise verschlüsselten Datei, um eine zweifach verschlüsselte Datei zu bilden, unter Verwendung eines zweiten Verschlüsselungsschlüssels (226); und
vor dem Drucken zumindest eines zweiten Teils der teilweise entschlüsselten Dokumentdatei Entschlüsseln der zweifach verschlüsselten Datei unter Verwendung zumindest eines von entweder dem zweiten Verschlüsselungsschlüssel oder einem dritten Verschlüsselungsschlüssel (230).

3. Das Verfahren gemäß Anspruch 1, das ferner folgenden Schritt aufweist: Drucken zumindest eines Teils der teilweise entschlüsselten Dokumentdatei unter Verwendung eines Garantierter-Druck-Verfahrens, wobei der zweite Teil ansprechend auf einen ersten Satz von Drucksignalen gedruckt wird, und das folgende Schritte aufweist:
optisches Abtasten des gedruckten zweiten Teils auf einem Medium durch eine Abtastvorrichtung, wodurch ein zweiter Satz von Drucksignalen erzeugt wird, der den gedruckten zweiten Teil darstellt, der auf das Medium gedruckt wurde,
Vergleichen des ersten Satzes von Drucksignalen mit dem zweiten Satz von Drucksignalen, und
Freigeben des Zurückkehrens zu dem ersten Computerschritt auf die Bestimmung hin, dass der Teil des Bildes ordnungsgemäß gedruckt wurde.

4. Ein System zum Steuern und Sicherstellen des Druckens einer Dokumentdatei, die über ein Computernetzwerk geliefert wird, das folgende Merkmale aufweist:
einen ersten Computer (110), der angepasst ist, um zumindest einen ersten Teil einer Dokumentdatei (112) unter Verwendung eines ersten Verschlüsselungsschlüssels zu verschlüsseln;
eine Datenübertragungsvorrichtung (102), die mit dem ersten Computer gekoppelt ist, die in der Lage ist, die teilweise verschlüsselte Dokumentdatei an einen zweiten Computer zu übertragen;
eine Druckvorrichtung (116), die wirksam mit der Datenübertragungsvorrichtung gekoppelt ist, wobei die Druckvorrichtung angepasst ist, um die Dokumentdatei (112) zu empfangen und zumindest einen Teil des ersten Teils der Dokumentdatei zu entschlüsseln und den ersten Teil steuerbar zu drucken, wobei zumindest eine Einrichtung zum Erzeugen einer Nummer, die den gedruckten Teil mit der Druckvorrichtung korreliert, und eine Einrichtung zum Senden der erzeugten Nummer über das Computernetzwerk verwendet werden.

5. Das System gemäß Anspruch 4, bei dem die Druckvorrichtung aus einem Computer gebildet ist, der wirksam mit einem Drucker gekoppelt ist.

6. Das System gemäß Anspruch 5, bei dem die Druckvorrichtung ferner folgende Merkmale aufweist:
a. einen Druckkopf, der mit einer Druckvorrichtungspositionssteuerung gekoppelt ist;
b. eine optische Abtastvorrichtung, die wirksam mit der Druckvorrichtung gekoppelt ist;
c. eine Steuerung, die einen Eingang zum Empfangen von Drucksteuersignalen von dem Computer, einen Eingang zum Empfangen von Signalen von der optischen Abtastvorrichtung und einen Ausgang aufweist, der mit der Druckvorrichtungspositionssteuerung gekoppelt ist, wobei die Steuerung angepasst ist, um die Drucksteuersignale, die von dem Computer empfangen werden, mit Signalen von der optischen Abtastvorrichtung zu vergleichen, die ein Bild darstellen, das tatsächlich gedruckt wurde.

## Revendications

1. Procédé de commande et de sécurisation de l'impression d'un fichier de documents communiqué par l'intermédiaire d'un réseau d'ordinateurs, qui comprend les étapes consistant à:
à un premier ordinateur: chiffrer au moins une première partie d'un fichier de documents en utilisant au moins une première clé de chiffrage en créant ainsi un fichier partiellement chiffré (226), et transmettre à un deuxième ordinateur le fichier de documents partiellement chiffré par l'intermédiaire dudit réseau d'ordinateurs (226);
à un deuxième ordinateur: imprimer au moins une deuxième partie dudit fichier de documents partiellement chiffré en utilisant une méthodologie d'impression sérialisée (246), qui inclut les étapes consistant à engendrer par un dispositif d'impression qui imprime ledit fichier de documents déchiffré, un numéro corrélant ledit fichier de documents déchiffré audit dispositif d'impression (232), et renvoyer ledit numéro audit premier ordinateur en permettant ainsi audit deuxième ordinateur de recevoir ladite première clé de chiffrage (232);
renvoyer audit premier ordinateur un numéro d'impression sérialisée et recevoir, en réponse à ceci, ladite première clé de chiffrage (232, 239);
déchiffrer ladite première partie dudit fichier partiellement chiffré pour créer un fichier de documents déchiffré ;
imprimer ledit fichier de documents déchiffré (246).

2. Procédé selon la revendication 1 qui inclut en outre les étapes consistant à:
avant de transmettre le fichier de documents partiellement chiffré à un deuxième ordinateur, chiffrer au moins une partie dudit fichier partiellement chiffré pour former un fichier doublement chiffré en utilisant une deuxième clé de chiffrage (226); et
avant d'imprimer au moins une deuxième partie dudit fichier de documents partiellement déchiffré, déchiffrer ledit fichier doublement chiffré en utilisant au moins, soit ladite deuxième clé de chiffrage, soit une troisième clé de chiffrage (230).

3. Procédé selon la revendication 1 qui inclut en outre l'étape consistant à: imprimer au moins une partie dudit fichier de documents partiellement déchiffré en utilisant un procédé d'impression garanti, dans lequel ladite deuxième partie est imprimée en réponse à un premier jeu de signaux d'impression, ce procédé incluant les étapes consistant à:
analyser optiquement au moyen d'un analyseur ladite deuxième partie imprimée sur un support, en produisant ainsi un deuxième jeu de signaux d'impression représentant ladite deuxième partie imprimée qui a été imprimée sur ledit support;
comparer ledit premier jeu de signaux d'impression audit deuxième jeu de signaux d'impression, et
valider l'étape de retour audit premier ordinateur lorsqu'il a été déterminé que ladite partie de l'image a été imprimée correctement.

4. Système de commande et de sécurisation de l'impression d'un fichier de documents communiqué par l'intermédiaire d'un réseau d'ordinateurs comprenant:
un premier ordinateur (110) apte à chiffrer au moins une première partie d'un fichier (112) de documents en utilisant une première clé de chiffrage;
un dispositif de transfert (102) de données couplé audit premier ordinateur et apte à transférer au deuxième ordinateur le fichier de documents partiellement chiffré ;
un dispositif d'impression (116) couplé fonctionnellement audit dispositif de transfert de données, ledit dispositif d'impression étant apte à recevoir ledit fichier (112) de documents et à déchiffrer au moins une partie de ladite première partie dudit fichier de documents et à imprimer, d'une façon susceptible d'être commandée, ladite première partie en utilisant au moins un moyen de génération d'un numéro corrélant ladite partie imprimée audit dispositif d'impression et un moyen de transmission dudit numéro engendré par l'intermédiaire dudit réseau d'ordinateurs.

5. Système selon la revendication 4 dans lequel ledit dispositif d'impression comprend un ordinateur couplé fonctionnellement à une imprimante.

6. Système selon la revendication 5, dans lequel ledit dispositif d'impression comprend en outre:
a. une tête d'impression couplée à un dispositif de commande de position du dispositif d'impression;
b. un analyseur optique couplé fonctionnellement audit dispositif d'impression;
c. un dispositif de commande incluant une entrée pour recevoir des signaux de commande d'impression venant de l'ordinateur, une entrée pour recevoir des signaux dudit analyseur optique et une sortie couplée audit dispositif de commande de position du dispositif d'impression, ledit dispositif de commande étant apte à comparer les signaux de commande d'impression reçus de l'ordinateur à des signaux reçus de l'analyseur optique représentant une image qui a été réellement imprimée.
